# FASCICULE DE BREVET EUROPEEN

(11) **EP 0 365 402 B1**
(45) Date de publication et mention de la délivrance du brevet: **24.02.1993**
(21) Numéro de dépôt: 89402822.4
(22) Date de dépôt: 13.10.1989
(51) Int. Cl.: H04Q 9/00

(54) **Ensemble pour le transfert et la collecte à distance de données provenant notamment de compteurs**
Einrichtung zur Übertragung und Fernerfassung von Zählerdaten
Arrangement for the transfer and remote collection of counter data

(30) Priorité: 15.10.1988 DE 3835145; 24.11.1988 FR 8815317
(43) Date de publication de la demande: 25.04.1990
(73) Titulaire: SCHLUMBERGER INDUSTRIES, F-92120 Montrouge (FR)
(72) Inventeur: Bonnet, Jean-Loup, F-75014 Paris (FR); Jurado, Yves, F-92170 Vanves (FR); Korner, Holger, D-2440 Oldenburg (DE)
(74) Mandataire: Dupont, Henri

(56) Documents cités:
- FR-A- 2 309 104
- FR-A- 2 582 894
- GB-A- 2 203 578
- US-A- 3 445 813
- US-A- 3 729 710

## Description

La présente invention concerne un ensemble pour le transfert et la collecte à distance de données provenant notamment de compteurs, tels que des compteurs d'eau, de gaz ou d'électricité.

Les compteurs installés dans des bâtiments à usage industriel ou domestique mesurent la quantité d'énergie (électricité) ou de fluide (eau, gaz) consommée ; certains compteurs sont aptes à garder en mémoire les données relatives aux consommations, par exemple sous forme cumulées grâce à un totalisateur à rouleaux. Ces données sont utilisées pour la facturation au consommateur par l'organisme exploitant. Pour disposer de ces données, on procède généralement à un relevé visuel de chaque compteur. Afin de réduire le coût en personnel et la durée de telles opérations, on a proposé, de manière connue, d'effectuer celles-ci à distance, à l'aide d'ensembles dits de "télérelevé" ou de "téléreport" comportant des moyens de collecte centralisés reliés à chaque compteur par un réseau de liaisons filiaires et susceptibles de recueillir et mémoriser, généralement de façon périodique, les données de chacun des compteurs. La sortie des moyens de collecte est reliée à des moyens de traitement et/ou de communication.

Outre les avantages mentionnés précédemment par rapport au relevé visuel, le télérelevé ou téléreport d'une part procure une meilleure sécurité par une surveillance quasi continue des compteurs et d'autre part une meilleure gestion de la consommation par l'utilisateur.

On connait déjà de tels ensembles, appliqués notamment aux compteurs d'eau.

Une première famille d'ensembles connus utilise un réseau de communication existant.

Selon un premier exemple (CMR), l'ensemble utilise un câble coaxial de télévision reliant une pluralité de bâtiments (abritant chacun un ou plusieurs compteurs) à un émetteur central ; les moyens de collecte centralisés sont reliés audit câble ; chaque compteur est relié à ce dernier par l'intermédiaire d'un dispositif susceptible d'interroger le compteur correspondant ; l'interrogation et la transmission des données sont réalisées selon une séquence aléatoire imposée par ledit dispositif d'interrogation.

Selon un second exemple, l'ensemble fait appel à un réseau téléphonique reliant des bâtiments où sont installés les compteurs à un central téléphonique relié, par une ligne téléphonique, à un local de l'organisme distributeur d'énergie, d'eau ou de gaz, où sont situés les moyens de collecte. Chaque compteur est relié à un dispositif d'interrogation normalement en état de veille. Les moyens de collecte commandent le central afin d'actionner le dispositif d'interrogation, qui, une fois "réveillé", interroge le compteur et transmet les données au central qui à son tour transmet aux moyens de collecte.

Selon un troisième exemple connu, chaque compteur est relié à une mémoire elle-même reliée à un moyen de communication téléphonique par MODEM branché sur le réseau téléphonique.

Ces ensembles connus, bien que satisfaisants à certains points de vue tels que la sécurité et la fiabilité, n'en présentent pas moins des inconvénients.

En effet, l'ensemble selon le premier exemple nécessite une alimentation en énergie électrique du dispositif d'interrogation. L'ensemble selon le troisième exemple est onéreux compte tenu de l'affectation d'un MODEM et d'un numéro de téléphone spécifique à chaque compteur.

De plus, les ensembles selon les premier, second et troisième exemples ci-dessus font appel à un dispositif d'interrogation relativement onéreux, et, du fait qu'ils reposent sur un réseau de communication existant, d'une part ne peuvent être mis en place que dans des zones déjà pourvues de tels réseaux, et d'autre part nécessitent des précautions particulières en vue d'éviter les interférences entre la transmission de données de compteurs et le fonctionnement originel du réseau.

Par ailleurs, on connait une seconde famille d'ensembles pourvus de leurs propres liaisons de communication.

Un premier type d'ensemble connu (AKUDOM) comprend des moyens de collecte centralisés reliés selon un réseau en étoile à chacun des compteurs ; ces derniers, du type dits "à émetteurs d'impulsions", sont aptes à délivrer un signal comprenant une impulsion pour un volume d'eau écoulé.

Bien que présentant un coût relativement faible et une fiabilité satisfaisante (les données de chaque compteur sont correctement identifiées), cet ensemble connu présente les inconvénients de nécessiter des liaisons spécifiques vers chaque compteur, et de ne pouvoir trouver que des applications limitées compte tenu des limitations d'une part du nombre de compteurs susceptibles d'être reliés et d'autre part de la distance séparant chaque compteur des moyens de collecte.

Un second type d'ensemble connu (MAYA) comporte des moyens centraux de collecte reliés par une liaison commune à une série de dispositifs primaires de collecte, dont chacun d'eux est relié à plusieurs compteurs du type à "émetteur d'impulsions". Sur appel des moyens centraux de collecte, chaque dispositif primaire de collecte interroge séquentiellement chacun des compteurs.

Cet ensemble connu souffre d'inconvénients rédhibitoires. Le code d'identification de chaque compteur est disposé dans le dispositif primaire de collecte, ce qui est gênant sur le plan de la fiabilité et de la flexibilité (à l'occasion de changement de compteurs). De plus, le partage de plusieurs compteurs pour un dispositif primaire de collecte éloigne les compteurs de ce dernier et, en conséquence, augmente le coût et la complexité du câblage.

En outre, les premier et second types d'ensembles visés ci-dessus sont tous les deux affectés du défaut propre aux compteurs à émetteurs d'impulsions, à savoir qu'ils ne permettent qu'un codage relatif de la quantité d'eau écoulée.

D'après le brevet US-A-3,445,813 et la demande de brevet FR-A-2,582,894 est également connu un ensemble pour le transfert et la collecte à distance de données comprenant une unité centrale et une pluralité d'unités satellites adressables, reliées les unes aux autres par l'intermédiaire d'une ligne commune, et dans lequel les données transmises par l'unité satellite à l'unité centrale peuvent notamment inclure l'adresse de l'unité satellite ; un tel ensemble présente cependant un manque de souplesse au cours de son exploitation, tout particulièrement en ce qui concerne la mise à jour, au niveau de l'unité centrale, des informations relatives aux unités satellites.

En conclusion, on comprend que le besoin se fait sentir d'un ensemble de relevé à distance de compteur qui soit à la fois, d'un coût de réalisation, d'installation et de fonctionnement faible, fiable (tant sur le plan de la transmission que de la provenance des données), souple d'utilisation (autorisant de manière simple, un changement de compteur et l'adjonction et/ou l'enlèvement de compteurs sur le réseau de communication), et qui ne soit pas tributaire d'un réseau de communication existant.

L'ensemble selon l'invention vise à remédier aux inconvénients mentionnés précédemment des ensembles connus et tend à présenter simultanément les avantages requis ci-dessus.

A cette fin, selon l'invention, l'ensemble pour le transfert et la collecte à distance de données telles que des quantités d'énergie ou de fluide mesurées par des compteurs comportant chacun une unité de stockage et d'émission desdites données, comprend : des moyens de collecte reliés à une liaison commune, et pour chaque compteur, entre ladite liaison filaire commune et le compteur en question, un organe interrupteur adressable, normalement ouvert et apte à se fermer, suite à l'envoi par les moyens de collecte, à travers ladite liaison filaire commune, d'un signal correspondant à son adresse, de manière à autoriser le passage du flux de données depuis l'unité d'émission correspondante vers lesdits moyens de collecte ; l'ensemble est caractérisé par le fait que chaque unité de stockage contient des données relatives à l'identification du compteur qui sont indépendantes de l'adresse de l'organe interrupteur, cette dernière correspondant à l'adresse physique de l'interrupteur, et que chaque unité d'émission correspondante est adaptée à transmettre auxdits moyens de collecte lesdites données relatives à l'identification du compteur.

Avantageusement, la liaison commune est constituée d'une première liaison destinée au passage des données et d'une seconde liaison destinée à la commande de de l'organe interrupteur.

Plus précisément, les moyens de collecte sont reliés à une source d'énergie électrique et la seconde liaison est également destinée à l'alimentation en énergie électrique de chaque circuit interrupteur.

De préférence, la liaison commune est constituée d'une double paire de câbles téléphoniques.

Selon une forme de réalisation avantageuse, chaque circuit interrupteur est disposé sur la liaison commune et est relié au compteur correspondant par une liaison auxiliaire.

Selon une autre forme de réalisation possible, chaque circuit interrupteur est disposé à l'extrémité d'une liaison auxiliaire placée en dérivation sur la ligne commune.

L'organe interrupteur est par exemple logé dans un bottier ou une prise qui est relié à l'extrémité de la ligne auxiliaire et qui vient se brancher sur le compteur.

L'identification de chaque compteur est possible par le fait que les moyens de collecte comprennent des moyens émetteurs d'un signal d'identification propre à chacun des organes interrupteurs, chaque organe interrupteur comprenant des moyens de mémorisation d'un signal de référence correspondant audit signal d'identification et des moyens de comparaison du signal de référence et du signal émis, aptes à commander des moyens de fermeture du circuit électrique reliant le compteur correspondant aux moyens de collecte.

Les moyens émetteurs sont aptes à émettre un signal analogique. En variante, les moyens émetteurs émettent un signal numérique.

Selon un premier mode de mise en oeuvre, les moyens de collecte sont aptes à émettre de façon continue ou périodique les signaux d'identification, les moyens de fermeture sont actionnés tant que le signal propre à l'organe interrupteur correspondant est émis.

Selon un second mode de mise en oeuvre, le signal d'identification est émis une première fois pour fermer l'interrupteur et une seconde fois pour ouvrir ce dernier.

Avantageusement, le signal d'identification analogique présente un spectre de fréquence donné, et les moyens de comparaison sont constitués d'un filtre fréquenciel passe-bande.

Selon un mode de réalisation particulier, les données incluent deux types d'informations : celles relatives au numéro propre du compteur qui sont enregistrées d'une manière immuable dans une mémoire solidaire du compteur, et celles relatives à la consommation en énergie ou en fluide, qui sont contenues dans une unité de stockage également solidaire du compteur.

Le signal de référence associé à l'organe interrupteur correspond par exemple à l'adresse physique de l'interrupteur donc à l'adresse de facturation.

Ainsi, à l'occasion d'un changement de compteur au niveau d'un organe interrupteur, il n'est pas nécessaire d'enregistrer ou de saisir manuellement, au niveau des moyens de collecte, les modifications relatives au numéro du compteur.

L'invention sera bien comprise à la lumière de la description qui suit en référence au dessin dans lequel:
- La figure 1 est un schéma d'une première forme de réalisation de l'ensemble selon l'invention ;
- La figure 2 est un schéma électrique fonctionnel d'un organe interrupteur associé à un compteur ;
- La figure 3 est un schéma agrandi d'un relais, et
- La figure 4 est un schéma d'une seconde forme de réalisation de l'ensemble selon l'invention.

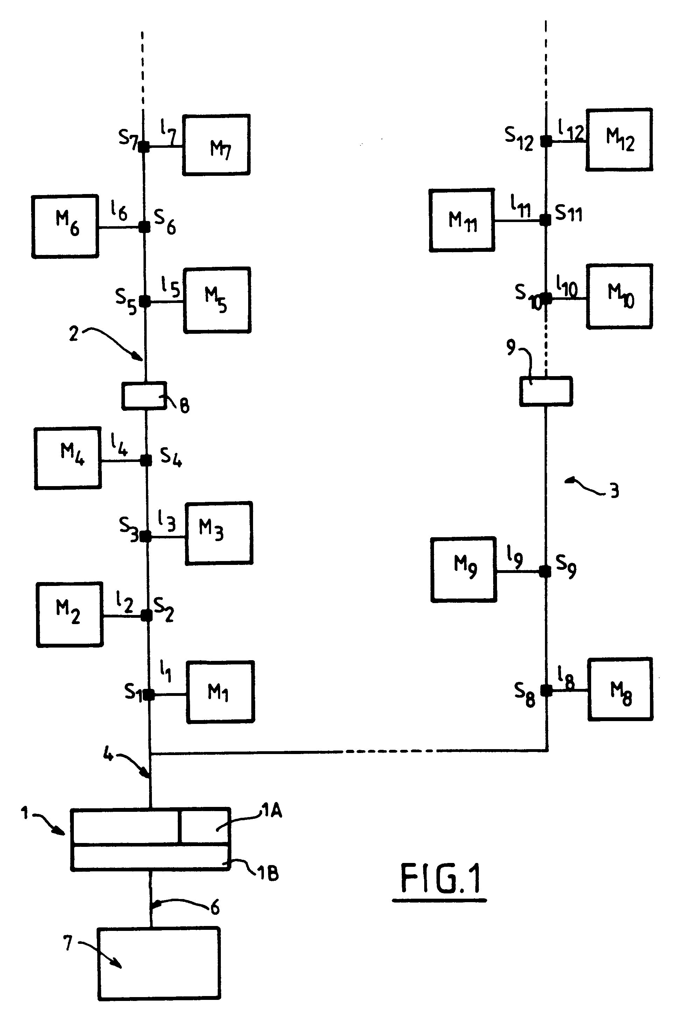

L'ensemble selon l'invention montré sur la figure 1 comprend une pluralité de compteurs, par exemple d'eau, portant les références M1,M2,..., M12. Chaque compteur correspond à un module ou une partie d'un module de consommation tel qu'une maison individuelle ou un appartement d'immeuble. L'ensemble comprend en outre des moyens de collecte 1 centralisés, disposés dans un bâtiment qui peut être celui comprenant les modules de consommation ou un bâtiment distinct et éloigné de ceux mentionnés précédemment. Plusieurs compteurs sont reliés aux moyens de collecte 1 par une ligne de communication commune, à savoir, selon l'exemple décrit, une ligne commune 2 pour les compteurs M1 à M7 et une ligne commune 3 pour les compteurs M8 à M12 ; les lignes 2 et 3 présentent un tronc commun 4 relié aux moyens de collecte 1.

Il est entendu que l'invention s'applique à un ensemble de compteurs intégrés soit dans un habitat collectif (un ou plusieurs bâtiments) soit un habitat individuel (pluralité de maisons dispersées).

Chaque compteur Mi (i = 1 à 12) incorpore une unité de stockage et d'émission des données relatives à la consommation d'eau ; l'unité (non représentée) est du type connu en soi et peut être par exemple constituée de rouleaux totalisateurs et de moyens aptes à transformer l'information (constituée par la position de chaque rouleau) en signaux électriques ; un exemple de tels moyens est donné par le système commercialisé par la société américaine Schlumberger Industries, sous la dénomination commerciale ARB.

En outre, chaque compteur Mi est relié à la ligne commune 2 (ou 3) par l'intermédiaire d'une ligne auxiliaire lᵢ et d'un organe interrupteur Si disposé sur la ligne commune ; l'indice i est le même pour chaque trilogie compteur M, organe interrupteur S et ligne auxiliaire 1.

Les moyens de collecte 1 sont reliés par une liaison 6 à des moyens 7 de traitement et/ou de transmission de données, connus en eux-mêmes, tels qu'un MODEM téléphonique.

Les données transmises depuis chaque compteur vers les moyens de collecte incluent un code d'identification du compteur. Les moyens de collecte 1 comprennent des moyens émetteurs 1A de tels codes, et des moyens de mémorisation 1B des données issus de différents compteurs.

En fonction de la longueur des lignes de communication commune 2 et 3, des moyens relais (8, 9), connus en soi, sont prévus sur ces dernières en vue d'éviter les conséquences de l'affaiblissement des signaux transmis portant les données. A chaque relais est associé un code d'identification, du même type que les codes d'identification des relais. A titre indicatif, des relais peuvent être prévus lorsque la longueur de la liaison L1 et L2 dépasse 500 à 800 mètres.

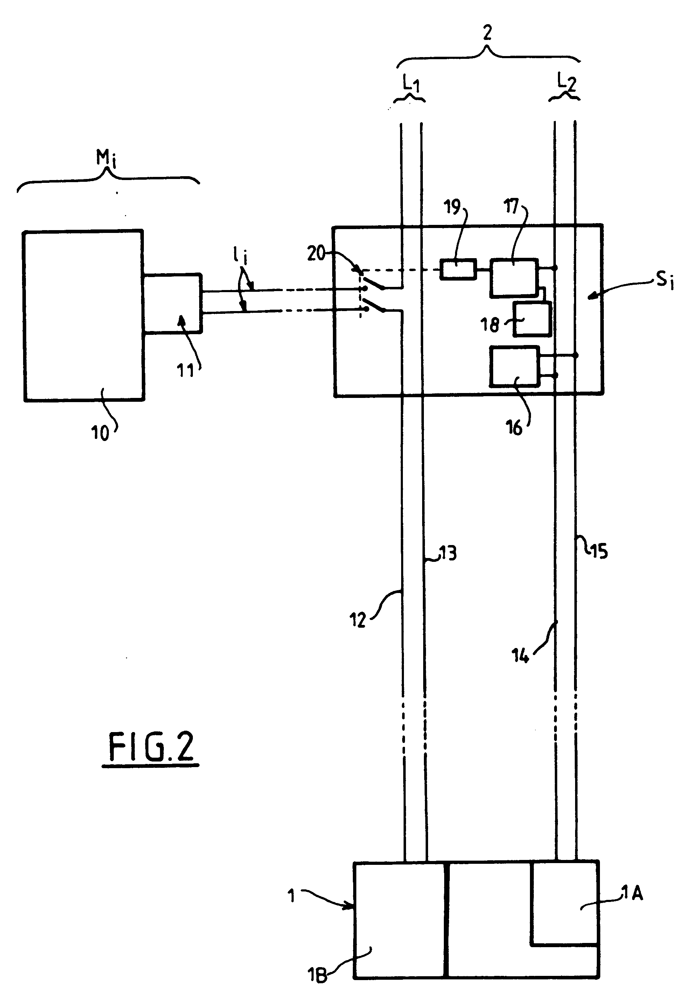

La figure 2 montre en détail de façon schématique une vue agrandie de la ligne de communication commune et de l'un des organes interrupteurs Si associée au compteur Mi.

Le compteur Mi comprend la partie de comptage 10 proprement dite et l'unité 11 de stockage et d'émission des données ; cette dernière est reliée à l'organe interrupteur Si par la liaison auxiliaire lᵢ, constituée de deux câbles téléphoniques. L' unité 11 peut être constituée par le dispositif fabriqué et vendu par la société américaine Schlumberger Industries, sous la dénomination ARB.

La ligne de communication commune l comprend deux liaisons parallèles L1 et L2 ; les première et seconde liaisons respectivement L1 et L2 sont chacune constituées d'une paire de câbles téléphoniques respectivement 12,13 et 14,15.

L'organe interrupteur Si comprend un bloc d'alimentation 16 en énergie électrique relié à la seconde liaison L2 (câbles 14,15), un comparateur 17 dont une entrée est reliée à un des câbles (14) de la liaison 12 et l'autre entrée est reliée à une mémoire 18 contenant le signal d'identification propre à l'organe interrupteur Si ; la sortie du comparateur attaque une commande 19 d'un interrupteur 20 (normalement ouvert) placé sur la liaison auxiliaire lᵢ ; cette dernière relie la première liaison L1 (câbles 12 et 13) au compteur Mi.

Le fonctionnement, décrit de façon schématique, est le suivant.

Les moyens de collecte 1 émettent, par les moyens metteurs 1A, un signal d'identification porteur du code propre à un interrupteur Si et donc à un compteur Mi donné. Chaque code est constitué d'un signal soit analogique (à une fréquence donnée par exemple), soit numérique (suite de huit bits par exemple). Ledit signal est transmis par le câble 14 de la liaison L2 le long des lignes communes 2 et 3. Chaque comparateur 17 (prévu dans chaque interrupteur Si) compare le signal émis avec le signal gardé en mémoire 18 et propre au compteur Mi associé. Dans le cas où les signaux respectivement émis et mémorisés sont identiques, le comparateur 17 agit sur la commande 19, constituée d'un bistable, qui provoque la fermeture de l'interrupteur 20. L'unité de stockage et d'émission 11 du compteur Mi correspondant se trouve alors reliée aux moyens de collecte 1 par la liaison lᵢ et la liaison L1. L'unité 11 se trouve alors également alimentée en énergie par la fermeture de l'interrupteur 20, et émet les données qui sont transmises aux moyens de collecte 1 par la liaison L1.

Les moyens émetteurs 1A des moyens de collecte émettent à nouveau le signal d'identification du compteur Mi dès que toutes les données du compteur sont transmises vers la mémoire 1B. A cet instant, le comparateur 17 agit sur le bistable 19 qui revient à son état initial de manière à provoquer la réouverture de l'interrupteur 20.

Les moyens émetteurs 1A émettent ainsi le signal d'identification d'un compteur une première fois pour fermer l'interrupteur 20 et une seconde fois pour l'ouvrir à nouveau ; le laps de temps séparant les premier et second signaux propre au même compteur Mi, correspond à la transmission (via la liaison L1) des données dudit compteur. Est émis ensuite un signal d'identification différent, propre au compteur suivant.

Par ailleurs, pour l'interrogation de compteurs Mi situés au-delà d'une distance donnée de liaison, par exemple de l'ordre de 500 mètres à 800 mètres, des moyens relais, tels que le relais 9, sont prévus.

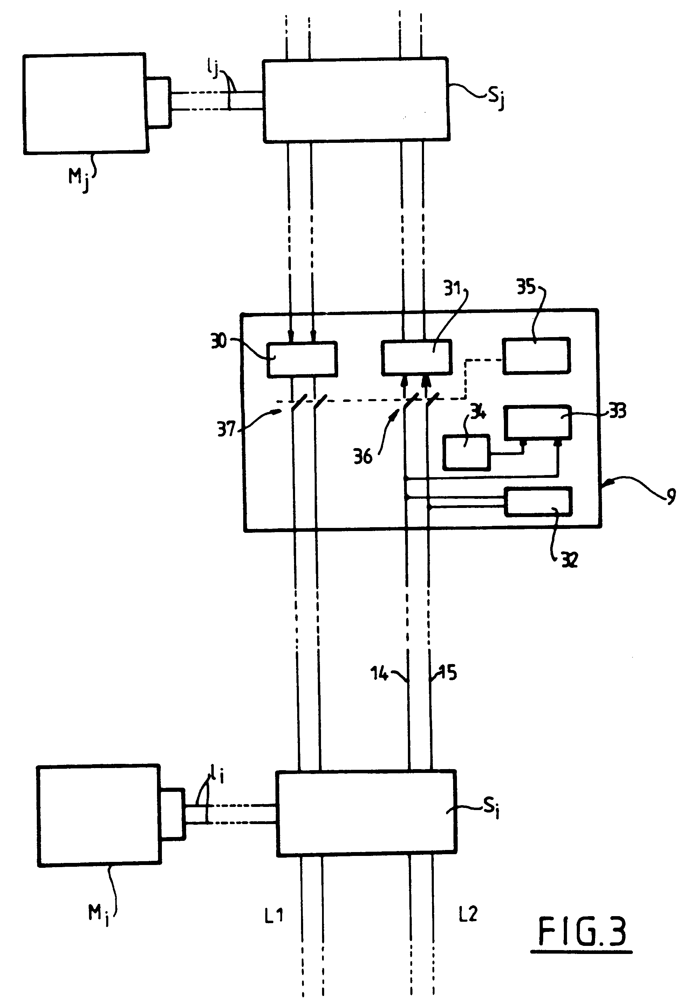

La figure 3 montre en détail un relais 9, comprenant une première mémoire tampon/amplificateur 30 et une seconde mémoire tampon/ammplificateur 31, disposées respectivement sur les lignes L1 et L2, un bloc d'alimentation 32 en énergie électrique reliée à la liaison L2, et un comparateur 33 dont une entrée est reliée au câble 14 de la liaison L2 et l'autre entrée est liée à une mémoire 34 apte à mémoriser le signal d'identification propre au relais ; la sortie du comparateur 33 attaque un dispositif de commande, tel qu'un bistable 35 liés à deux interrupteurs 36 et 37 placés sur les liaisons respectives L2 et L1, en amont des mémoires tampons respectives 30 et 31.

Les moyens de collecte émettent le signal propre au relais 9 via L2, qui est comparé par le comparateur 33 au signal d'identification propre au relais et mémorisé dans la mémoire 34. En cas d'identité entre le signal reçu et le signal mémorisé, le comparateur 33 actionne la commande 35 qui provoque la fermeture des interrupteurs 36 et 37 (normalement ouverts). La mémoire tampon/amplificateur 31 est alors en mesure de mémoriser et amplifier le signal d'identification, propre à un compteur Mj situé au-delà du relais 9, et véhiculé par la liaison L2. Lorsque ledit compteur Mj émet ses données via L1 (par le processus de fermeture de l'interrupteur Sj), celles-ci sont amplifiées par la mémoire/amplificateur 30 pour atteindre les moyens de collecte 1.

Une fois interrogés tous les compteurs Mk associés au-delà du relais 9, les moyens de collecte émettent une seconde fois le signal d'identification propre audit relais, afin de provoquer le retour du bistable 35 à son état initial et donc l'ouverture des interrupteurs 36 et 37.

Ainsi, les moyens de collecte émettent une succession de signaux d'identification selon la séquence suivante : relais-fermeture, compteur Mi - fermeture, compteur Mi - ouverture, ..., compteur Mj - fermeture, compteur Mj - ouverture, relais-ouverture.

La première liaison L1 est destinée à la transmission des données, tandis que la seconde liaison L2 sert à l'alimentation en énergie et à la commande de chaque interrupteur Si.

Avantageusement, le signal d'identification émis est, non pas celui du compteur donné, mais un code propre à un interrupteur Si donné. Ceci permet de changer le compteur sans avoir à modifier le code utilisé pour la commande de l'interrupteur Si.

L'ensemble de l'invention présente d'autres avantages.

Il présente un coût faible. En effet, les liaisons L1 et L2 sont constituées de câbles téléphoniques, et les connexions de celles-ci aux moyens de collecte aux interrupteurs et aux unités des compteurs sont réalisés par des organes connus, simples et bon marché ; enfin, les interrupteurs peuvent être réalisés à l'aide de circuits bon marché.

La consommation en énergie électrique de chaque interrupteur est très faible (inférieure à 1 mA).

L'ensemble est souple d'utilisation en ce sens que des compteurs peuvent être ajoutés et/ou enlevés sans difficultés. En effet, il suffit de brancher sur la ligne commune un interrupteur ou d'enlever celui-ci. De plus, les liaisons auxiliaires li permettent d'adapter la situation géographique des compteurs par rapport à la ligne commune.

Selon une variante de réalisation les liaisons L1 et L2 sont multiplexées de manière à n'utiliser qu'une paire téléphonique.

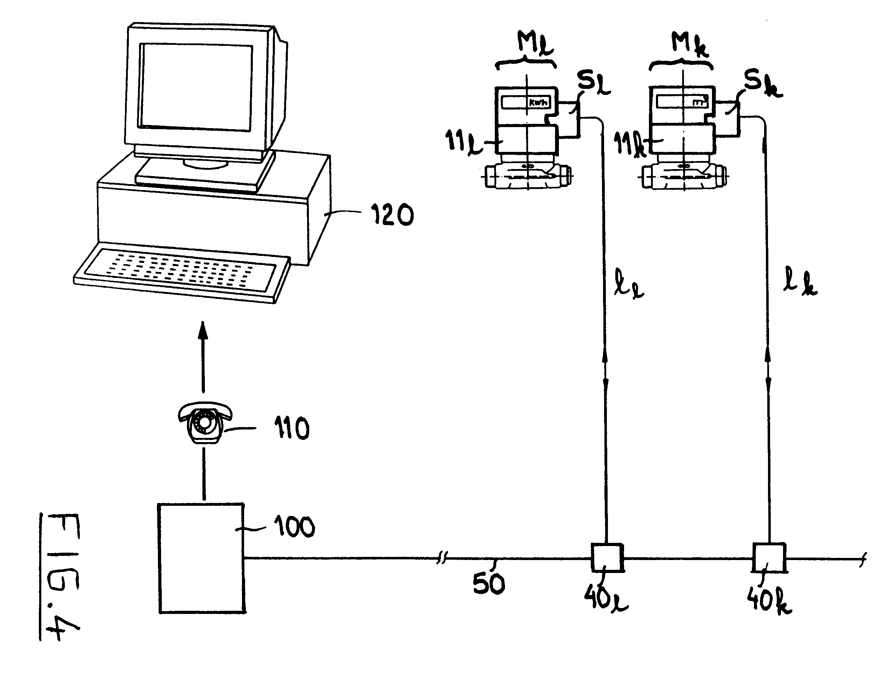

La figure 4 montre une autre forme de réalisation d'un ensemble comprenant par exemple deux compteurs, à savoir un compteur d'eau Mk et un compteur d'électricité M1. Chacun des deux compteurs comprend une unité de stockage et d'émission, respectivement 11k, 11l contenant les informations relatives à la consommation en eau et en électricité. Chaque compteur comprend en outre une mémoire dans laquelle est programmée le numéro propre du compteur, par exemple son numéro de série ; cette mémoire peut par exemple être l'unité de stockage 11k, respectivement 11l elle-même.

Les organes d'interrupteur Sk et Sl contenus dans des prises ou boîtiers viennent respectivement se brancher sur les compteurs Mk et Ml. Les organes d'interrupteur Sk et Sl sont similaires à l'organe interrupteur décrit en référence à la figure 2 ; ils contiennent également une mémoire dans laquelle est inscrite le signal de référence associé à l'interrupteur correspondant. De préférence, ce signal correspond à l'adresse physique de l'interrupteur, par exemple l'adresse de facturation.

Les organes interrupteurs Sk et Sl sont reliés à travers les lignes auxiliaires lₖ et lₗ à la ligne de communication commune 50 par l'intermédiaire des boîtiers de dérivation 40k et 40l. La ligne de communication commune 50 aboutit à des moyens de collecte 100 similaires à ceux décrits en référence à la figure 1, reliés par l'intermédiaire d'un MODEM téléphonique 110 à un centre de traitement 120.

Ainsi, lorsque les moyens de collecte émettent un signal d'identification porteur du code propre à l'interrupteur Sk par exemple, l'unité de stockage et d'émission 11k envoie en direction des moyens de collecte, les informations relatives au numéro du compteur Mk, ainsi que celles relatives à la consommation.

Par conséquent, chaque interrogation du compteur Mk permet la mise à jour au niveau des moyens de collecte 100, s'il y a lieu, du numéro propre au compteur Mk branché à l'interrupteur Sk. Ainsi, un changement de compteur Mk au niveau d'un interrupteur Sk ne nécessite pas de saisir manuellement, au niveau des moyens de collecte 100, les informations relatives au numéro du nouveau compteur installé.

## Revendications

1. Ensemble pour le transfert et la collecte à distance de données telles que des quantités d'énergie ou de fluide mesurées par des compteurs (Mi), chaque compteur comportant une unité de stockage et d'émission de données (11), ledit ensemble comprenant :
- des moyens de collecte (1) reliés à une liaison filaire commune (2,3) ;
- pour chaque compteur (Mi), entre ladite liaison filaire commune et le compteur (Mi) en question, un organe interrupteur (Si) adressable, normalement ouvert et apte à se fermer, suite à l'envoi par les moyens de collecte, à travers ladite liaison filaire commune, d'un signal correspondant à son adresse, de manière à autoriser le passage du flux de données depuis l'unité d'émission (11) correspondante vers lesdits moyens de collecte (1),
caractérisé par le fait que chaque unité de stockage contient des données relatives à l'identification du compteur (Mi) qui sont indépendantes de l'adresse de l'organe interrupteur, cette dernière correspondant à l'adresse physique de l'interrupteur, et que chaque unité d'émission correspondante est adaptée à transmettre auxdits moyens de collecte lesdites données relatives à l'identification du compteur.

2. Ensemble selon la revendication 1, caractérisé en ce que la liaison commune est constituée de deux liaisons en parallèle (L1, L2), la première liaison logique (L1) destinée au passage des données et la seconde liaison logique (L1) destinée à la commande de l'organe interrupteur.

3. Ensemble selon la revendication 2, caractérisé en ce que les moyens de collecte (1) sont reliés à une source d'énergie électrique et en ce que la seconde liaison (L2) est également destinée à l'alimentation en énergie électrique de chaque organe interrupteur (Si) et de l'unité d'émission correspondante.

4. Ensemble selon l'une des revendications 2 ou 3, caractérisé en ce que la liaison commune est constituée d'une double paire de câbles téléphoniques.

5. Ensemble selon l'une des revendications 2 ou 3, caractérisé en ce que la liaison commune est constituée d'une paire de câbles téléphoniques.

6. Ensemble selon l'une des revendications 1 à 5, caractérisé en ce que chaque organe interrupteur (Si) est disposé sur la liaison commune et est relié à l'unité d'émission correspondante par une liaison auxiliaire (li).

7. Ensemble selon l'une des revendications 1 à 5, caractérisé en ce que chaque organe interrupteur est disposé à l'extrémité d'une liaison auxiliaire placée en dérivation sur la ligne commune.

8. Ensemble selon la revendication 7, caractérisé en ce que l'organe interrupteur (Si) est logé dans un bottier ou une prise qui vient-directement se brancher sur le compteur (Mi).

9. Ensemble selon l'une des revendications 1 à 8, caractérisé en ce que les moyens de collecte (1) comprennent des moyens émetteurs d'un signal d'identification propre à chacun des organes interrupteurs, chaque organe interrupteur (Si) comprenant des moyens de mémorisation d'un signal de référence correspondant audit signal d'identification et des moyens de comparaison du signal de référence et du signal émis, aptes à commander des moyens de fermeture du circuit électrique reliant l'unité d'émission (1) correspondante aux moyens de collecte.

10. Ensemble selon la revendication 9, caractérisé en ce que les moyens de collecte (1) sont aptes à émettre de façon continue et séquentiellement les signaux d'identification, et en ce que les moyens de fermeture sont actionnés tant que le signal propre à l'organe interrupteur correspondant est émis.

11. Ensemble selon la revendication 9, caractérisé en ce que le signal d'identification propre à chaque interrupteur (Si) est de type analogique.

12. Ensemble selon la revendication 11, caractérisé en ce que le signal d'identification présente un spectre de fréquence donné, et en ce que les moyens de comparaison sont constitués d'un filtre fréquenciel passe-bande.

13. Ensemble selon la revendication 9, caractérisé en ce que le signal d'identification propre à chaque interrupteur (Si) est constitué d'une suite de bits, et les moyens de comparaison sont du type numérique.

14. Ensemble selon la revendication 9, caractérisé en ce que les moyens de mémorisation sont réglables de manière à permettre la modification dudit signal d'identification.

15. Ensemble selon la revendication 9, caractérisé en ce que les moyens de fermeture comprennent un bistable attaqué par son entrée par les moyens de comparaison, et en ce que les moyens de collecte sont aptes à émettre un signal d'identification propre à un même compteur une première fois afin de provoquer le changement d'état dudit bistable (correspondant à la fermeture du circuit) et une seconde fois pour provoquer le retour du bistable à son état initial (correspondant à l'ouverture dudit circuit).

## Patentansprüche

1. Einrichtung zur Übertragung und Fernerfassung von Daten, wie Energie- oder Fluidmengen, die von Zählern (Mi) gemessen werden, wobei jeder Zähler eine Einheit (11) zum Speichern und zur begabe von Daten umfaßt, mit
- Erfassungsmitteln (1), die mit einer gemeinsamen Verbindungsleitung (2, 3) verbunden sind;
- einem adressierbaren Schalterelement (Si) für jeden Zähler (Mi) zwischen der gemeinsamen Verbindungsleitung und dem betreffenden Zähler (Mi), das normalerweise geöffnet ist und schließt, nachdem von den Erfassungsmitteln über die gemeinsame Verbindungsleitung ein Signal entsprechend seiner Adresse abgegeben wurde, um den Durchfluß von Daten von der entsprechenden Abgabeeinheit (11) zu den Erfassungsmitteln (1) zu gestatten,
dadurch gekennzeichnet, daß jede Speichereinheit Daten enthält, die sich auf die Identifikation des Zählers (Mi) beziehen und unabhängig von der Adresse des Schalterelements sind, daß diese Identifikation der physischen Adresse des Schalters entspricht und daß jede entsprechende Abgabeeinheit zur Übertragung der auf die Identifikation des Zählers bezogenen Daten zu den Erfassungsmittel ausgelegt ist.

2. Einrichtung nach Anspruch 1, dadurch gekennzeichnet, daß die gemeinsame Verbindung durch zwei parallele Verbindungen (L1, L2) gebildet ist, wobei die erste logische Verbindung (L1) für den Datendurchlauf und die zweite logische Verbindung (L1) zur Steuerung des Schalterelements bestimmt ist.

3. Einrichtung nach Anspruch 2, dadurch gekennzeichnet, daß die Erfassungsmittel (1) mit einer elektrischen Energiequelle verbunden sind und daß die zweite Verbindung (L2) auch zur Versorgung eines jeden Schalterelements (Si) und der entsprechenden Abgabeeinheit mit elektrischer Energie bestimmt ist.

4. Einrichtung nach einem der Ansprüche 2 oder 3, dadurch gekennzeichnet, daß die gemeinsame Verbindung durch ein zweifaches Fernsprechkabelpaar gebildet ist.

5. Einrichtung nach einem der Ansprüche 2 oder 3, dadurch gekennzeichnet, daß die gemeinsame Verbindung durch ein Fernsprechkabelpaar gebildet ist.

6. Einrichtung nach einem der Ansprüche 1 bis 5, dadurch gekennzeichnet, daß jedes Schalterelement (Si) in der gemeinsamen Verbindung angeordnet und mit der entsprechenden Abgabeeinheit über eine Hilfsverbindung (li) verbunden ist.

7. Einrichtung nach einem der Ansprüche 1 bis 5, dadurch gekennzeichnet, daß jedes Schalterelement am Ende einer Hilfsverbindung angeordnet ist, die von der gemeinsamen Leitung abzweigt.

8. Einrichtung nach Anspruch 7, dadurch gekennzeichnet, daß das Schalterelement (Si) in einem Gehäuse oder einer Aufnahme untergebracht ist, die unmittelbar an den Zähler (Mi) anschließbar ist.

9. Einrichtung nach einem der Ansprüche 1 bis 8, dadurch gekennzeichnet, daß die Erfassungsmittel (1) Mittel zur Abgabe eines Identifikationssignales umfassen, das charakteristisch für ein jeweiliges Schalterelement ist, und daß jedes Schalterelement (Si) Mittel zum Speichern eines dem Identifikationssignal entsprechenden Bezugssignals und Mittel für einen Vergleich des Bezugssignals mit dem abgegebenen Signal umfaßt, um Schließmittel des elektrischen Schaltkreises anzusteuern, der die entsprechende Abgabeeinheit (1) mit den Erfassungsmitteln verbindet.

10. Einrichtung gemäß Anspruch 9, dadurch gekennzeichnet, daß die Erfassungsmittel (1) zur kontinuierlichen oder sequenziellen Abgabe der Identifikationssignale ausgelegt sind und daß die Schließmittel betätigt werden, wenn das für das entsprechende Schalterelement charakteristische Signal abgegeben wird.

11. Einrichtung nach Anspruch 9, dadurch gekennzeichnet, daß das für einen jeweiligen Schalter (Si) charakteristische Identifikationssignal von der analogen Art ist.

12. Einrichtung nach Anspruch 11, dadurch gekennzeichnet, daß das Identifikationssignal ein vorgegebenes Frequenzspektrum besitzt und daß die Vergleichsmittel durch ein Frequenz-Bandpaßfilter gebildet sind.

13. Einrichtung nach Anspruch 9, dadurch gekennzeichnet, daß das für einen jeweiligen Schalter (Si) charakteristische Identifikationssignal durch eine Bitfolge gebildet ist und daß die Vergleichsmittel von der numerischen Art sind.

14. Einrichtung nach Anspruch 9, dadurch gekennzeichnet, daß die Speichermittel derart einstellbar sind, daß eine Modifikation des Identifikationssignals zugelassen ist.

15. Einrichtung nach Anspruch 9, dadurch gekennzeichnet, daß die Schließmittel ein bistabiles Element umfassen, das an seinem Eingang durch die Vergleichsmittel beaufschlagt ist, und daß die Erfassungsmittel derart ausgelegt sind, daß ein geeignetes Identifikationssignal für denselben Zähler ein erstes Mal abgegeben wird, um eine Zustandsänderung des bistabilen Elements herbeizuführen (entsprechend dem Schließen des Schaltkreises) und ein zweites Mal abgegeben wird, um dafür zu sorgen, daß das bistabile Element wieder seinen anfänglichen Zustand annimmt (entsprechend dem Öffnen des Schaltkreises).

## Claims

1. A system for remote transfer and collection of data such as quantities of energy or fluid measured by meters (Mi), each meter including a unit (11) for storing and transmitting data, said system comprising:
collection means (1) connected to a common wire correction (2, 3);
a normally open addressable switch member (Si) for each meter (Mi) disposed between said common wire connection and the meter (Mi) in question and suitable for closing after a signal corresponding to its address has been sent by the collection means over said common wire connection, thereby authorizing a stream of data to pass from the corresponding transmission unit (11) towards said collection means (1), the system being characterized by the facts that each storage unit contains data relating to the identity of the meter (Mi), which data is independent of the address of the switch member, which address corresponds to the physical address of the switch, and that each corresponding transmission unit is adapted to transmit said data relating to the identity of the meter to said collection means.

2. A system according to claim 1, characterized in that the common connection is constituted by two parallel connections (L1, L2), the first logical connection (L1) being for passing data and the second logical connection (L2) being for controlling the switch member.

3. A system according to claim 2, characterized in that the collection means (1) are connected to a source of electrical power and in that the second connection (L2) is designed also to feed electrical power to each switch member (Si) and to each corresponding transmission unit.

4. A system according to claim 1 or 2, characterized in that the common correction is constituted by two telephone cable pairs.

5. A system according to claim 2 or 3, characterized in that the common connection is constituted by one telephone cable pair.

6. A system according to any one of claims 1 to 5, characterized in that each switch member (Si) is disposed on the common link and is connected to the corresponding transmission unit via an auxiliary link (lᵢ).

7. A system according to any one of claims 1 to 5, characterized in that each switch member is disposed at the end of an auxiliary link branching from the common line.

8. A system according to claim 7, characterized in that the switch member (Si) is housed in a housing or in a socket which is directly connected to the meter (Mi).

9. A system according to any one of claims 1 to 8, characterized in that the collection means (1) comprise means for transmitting an identity signal specific to each of the switch members, each switch member (Si) comprising means for storing a reference signal corresponding to said identity signal and means for comparing the reference signal with the transmitted signal and suitable for controlling closure means for closing the electrical circuit connecting the corresponding transmission unit (11) to the collection means.

10. A system according to claim 9, characterized in that the collection means (1) are suitable for continuously and sequentially transmitting identity signals, and in that the closure means are actuated when the signal specific to the corresponding switch member is transmitted.

11. A system according to claim 9, characterized in that the identity signal specific to each switch (Si) is of the analog type.

12. A system according to claim 11, characterized in that the identity signal has a given frequency spectrum, and in that the comparator means are constituted by a bandpass frequency filter.

13. A system according to claim 9, characterized in that the identity signal specific to each switch (Si) is constituted by a sequence of bits, and the comparison means are of the digital type.

14. A system according to claim 9, characterized in that the storage means are modifiable so as to enable said identity signal to be changed.

15. A system according to claim 9, characterized in that the closure means comprise a bistable having its input connected to the comparator means, and in that the collection means are suitable for transmitting an identity signal specific to the same meter a first time for causing the state of said bistable to change (corresponding to closing the circuit) and a second time for causing the bistable to return to its initial state (corresponding to opening said circuit).
